# EUROPÄISCHE PATENTANMELDUNG

(11) **EP 0 701 351 A2**
(43) Veröffentlichungstag der Anmeldung: **13.03.1996**
(21) Anmeldenummer: 95113502.9
(22) Anmeldetag: 28.08.1995
(51) Int. Cl.: H04L 27/36

(54) **Trägerfrequente Übertragung digitaler Signale im Burstbetrieb**

(30) Priorität: 07.09.1994 DE 4431884
(71) Anmelder: SIEMENS AKTIENGESELLSCHAFT, D-80333 München (DE)
(72) Erfinder: Bolze, Thomas, Dr.Ing., D-80804 München (DE); Neidlinger, Stephan, Dr.Ing., D-80807 München (DE)

(57) **Zusammenfassung**

Für die Übertragung von digitalen Fernseh- und/oder Rundfunksignalen in Koaxialkabelnetzen von einer Kopfstelle zu Teilnehmern wird häufig die Quadratur-Amplitudenmodulation mit zwei zueinander orthogonalen Trägersignalen verwendet. Für den Rückkanal von den Teilnehmern zur Zentrale ist dieses Modulationsverfahren aber schlecht geeignet, da wegen der Vielzahl der Teilnehmer die Teilnehmersignale häufig im Burstbetrieb ausgesendet werden und empfangsseitig keine ausreichende Zeit zur phasengenauen Trägersignalrückgewinnung besteht. Erfindungsgemäß wird deshalb für die trägerfrequente Übertragung digitaler Signale im Burstbetrieb eine Einseitenband-Amplitudenmodulation der digitalen Übertragungssignale vorgenommen.

## Beschreibung

Die Erfindung betrifft ein Verfahren zur Übertragung digitaler Signale im Burstbetrieb, also im sogenannten Zeitmultiplex-Vielfachzugriff, der auch als Time Division Multiple Access (TDMA) bezeichnet wird.

Neben der drahtlosen Übertragung von Fernseh- und/oder Rundfunksignalen über Funk werden diese Signale häufig von einer Zentrale über Koaxialkabel zu einer Vielzahl von Teilnehmern übertragen. Die Übertragung erfolgt dabei wegen der Übertragungseigenschaften der Koaxialkabel in der Regel mittels Trägerfrequenzverfahren, wobei bei digitaler Übertragung zur Erreichung einer entsprechenden Bandbreiteneffizienz Quadratur-Amplituden-Modulationsverfahren (QAM) vorgesehen sind. Bei diesem Verfahren werden zwei phasenmäßig zueinander orthogonale Trägersignale übertragen, wobei jeder Träger mit mehreren Amplitudenstufen moduliert werden kann. Zur Demodulation muß auch im Empfänger ein möglichst phasengenaues Trägersignal zur Verfügung stehen, um Verluste aufgrund von Nebensprechen des jeweils orthogonalen Kanals klein zu halten.

Bei Erweiterung der genannten Koaxialkabel-Übertragungsnetze, um eine größere Anzahl von Programmen und um sogenannte interaktive Dienste, wie beispielsweise interaktives Fernsehen in Form von Teleshopping und Multimediaanwendungen wird eine größere Bandbreite für die Übertragung von der Zentrale zu den Teilnehmern benötigt, so daß für die Übertragung der Signale der interaktiven Dienste von den Teilnehmern zur Zentrale nur noch wenige Frequenzbänder zur Verfügung stehen. Damit ergeben sich Schwierigkeiten, eine ausreichende Bandbreite für diese Signale zur Verfügung zu stellen. Zusätzliche Schwierigkeiten ergeben sich dabei dadurch, daß, wegen der Benutzung eines gemeinsamen Übertragungsweges zur Zentrale den einzelnen Teilnehmerstellen nur eine geringe Zeitspanne in einem periodischen Zyklus zur Verfügung steht. Die von den Teilnehmern stammenden Signale werden im sogenannten Zeitmultiplex-Vielfachzugriff, der auch als Time Division Multiple Access (TDMA) bezeichnet wird, übertragen. Zu Beginn der Empfangszeit muß aber im Empfänger eine möglichst phasengenaue Synchronisation auf das empfangene Trägersignal erfolgen. Damit ergibt sich das Problem, daß nur eine kurze Synchronisierzeit und damit eine kurze Einschwingdauer für die üblicherweise verwendeten Phasensynchronisationsschaltungen zur Verfügung steht, dies aber einer großen Bandbreite entspricht, so daß im allgemeinen eine entsprechende Phasengenauigkeit des demodulierten Trägersignals nur schwierig bzw. mit großem Aufwand bzw. mit entsprechend langen Signalbursts und damit kleiner Teilnehmerzahl zu erreichen ist.

Die Aufgabe bei der vorliegenden Erfindung besteht also darin, ein Verfahren zur trägerfrequenten Übertragung digitaler Signale im Burstbetrieb anzugeben, das beim Empfänger keine großen Synchronisationszeiten benötigt und das auch auf den bereits außerhalb der spezifizierten Übertragungsbandbreite der verwendeten Koaxialkabel einsetzbar ist.

Erfindungsgemäß wird die Aufgabe dadurch gelöst, daß das Verfahren der eingangs erwähnten Art durch die Merkmale des kennzeichnenden Patentanspruchs 1 weitergebildet ist. Das erfindungsgemäße Verfahren beruht dabei auf der Erkenntnis, daß beim erfindungsgemäßen Modulationsverfahren keine zueinander orthogonalen Trägersignale zu übertragen sind und daß durch die Übertragung nur eines Seitenbandes die Schrittgeschwindigkeit bei gleicher Bandbreite doppelt so groß als bei Quadratur-Amplitudenmodulation ist. Eine Weiterbildung des erfindungsgemäßen Verfahrens entsprechend dem Patentanspruch 2 führt zu einer noch besseren Bandbreiteneffizienz. Das erfindungsgemäße Verfahren ist dabei sowohl für die Übertragung von amplitudenmodulierten Signalen über Koaxialkabel oder Lichtwellenleiterkabel oder auch für die Übertragung dieser Signale mittels Funk geeignet. Spezielle Weiterbildungen des Verfahrens für die Übertragung der Rücksignale von Teilnehmern im Koaxialkabel-Fernsehnetz sind in den Patentansprüchen 4 und 5 näher beschrieben.

Die Erfindung soll im folgenden anhand eines in der Zeichnung dargestellten Ausführungsbeispiels näher erläutert werden. Dabei zeigt:
- Figur 1: die Prinzipschaltung eines erfindungsgemäßen Übertragungssystems und
- Figur 2: die Lage der Frequenzbänder beim erfindungsgemäßen Übertragungssystem.

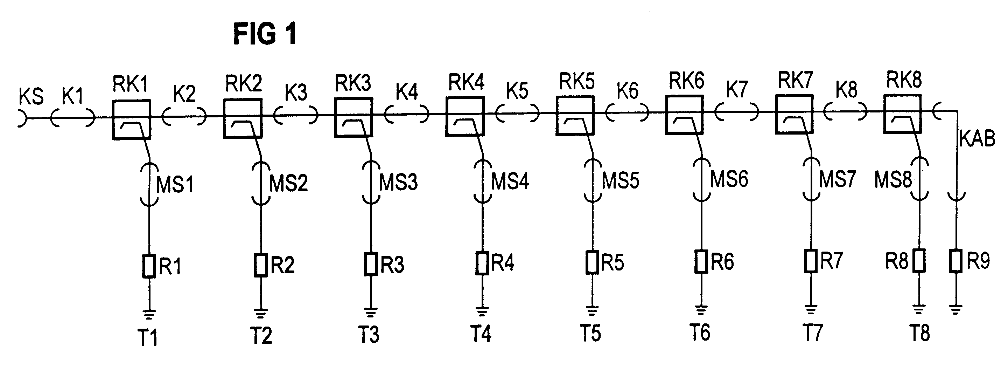

In der Figur 1 ist mit KS die Kopfstelle bezeichnet, die, beispielsweise an einen Endverstärker eines größeren aktiven Koaxialkabelnetzes oder an eine Zentrale angeschlossen, die zu übertragenden Signale an eine erste Kabelstrecke K1 abgibt und von dieser Signale der angeschlossenen Teilnehmer aufnimmt. An die erste Kabelstrecke K1 ist ein erster Richtkoppler RK1 angeschlossen, der mit einer Koppeldämpfung von etwa 20 dB Signale an eine erste Meßstelle MS1 auskoppelt, an die ein erster Verbraucherwiderstand R1 gegen Masse angeschlossen ist. An den ersten Richtkoppler RK1 schließt sich eine zweite Kabelstrecke K2 und ein zweiter Richtkoppler RK2 an, an diesem sind weiter eine dritte bis achte Kabelstrecke K3 ... K8 und ein dritter bis achter Richtkoppler RK3 ... RK8 angeschlossen. Beim Ausführungsbeispiel wurde die Koppeldämpfung bis zum fünften Richtkoppler RK5 jeweils zu 20 dB gewählt, für den sechsten und siebenten Richtkoppler wurde aufgrund des inzwischen durch die Kabelstrecke stark gedämpften Signals eine Koppeldämpfung von 15 dB und für den achten Richtkoppler RK8 von 10 dB eingestellt. An den achten Richtkoppler RK8 ist ein Kabelabschluß KAB mit einem neunten Widerstand R9 gegen Masse angeschlossen. Die an die einzelnen Meßstellen MS1 ... MS8 angeschlossenen Verbraucherwiderstände R1 ... R8 sowie der Widerstand R9 sind im Hinblick auf den Wellenwiderstand des verwendeten Koaxialkabels zu je 75 Ω gewählt. Die Länge der Koaxialkabel bis zum ersten Teilnehmer T1 war 20 m, bis zum zweiten Teilnehmer T2 60 m, bis zum dritten Teilnehmer T3 100 m, bis zum vierten Teilnehmer T4 150 m, bis zum fünften Teilnehmer T5 180 m, bis zum sechsten Teilnehmer T6 230 m, bis zum siebten Teilnehmer T7 270 m und bis zum achten Teilnehmer T8 320 m. Die Dämpfung für von der Kopfstelle KS ausgesendete Signale mit einer Frequenz von 640 MHz stieg dabei von 21,3 dB beim ersten Teilnehmer T1 bis 37 dB beim achten Teilnehmer T8 an. Für ein Signal mit einer Frequenz von 780 MHz ergab sich bis zum dritten Teilnehmer etwa die gleiche Dämpfung wie beim Signal für 640 MHz bis zum achten Teilnehmer ergab sich eine Zusatzdämpfung von 4 dB. Aus den Messungen ergab sich, daß obwohl das verwendete Koaxialkabel nur bis zu 450 MHz spezifiziert ist, an den einzelnen Meßstellen noch sowohl für eine Signalfrequenz von 640 MHz als auch für ca. 860 MHz für einen Netzbetrieb ausreichende Signalpegel anstanden.

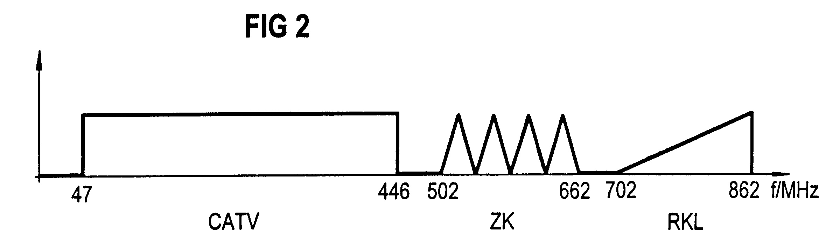

In der Figur 2 ist ein Frequenzplan für die über das Koaxialkabelsystem nach Figur 1 übertragenen Signale dargestellt. Nach dem Stande der Technik ist das Koaxialkabelsystem zur Übertragung von Kabelfernsehsignalen CATV eingerichtet, die im Frequenzbereich von 47 bis 446 MHz übertragen werden. Für die digitale Übertragung weiterer Fernsehsignale, beispielsweise vom Teilnehmer gewählter Programme, sind vier zusätzliche Träger zur Übertragung digitaler Signale mit einer Bitrate von 156 Mbit/s vorgesehen, die im Frequenzbereich zwischen 502 und 662 MHz als Zusatzkanäle ZK übertragen werden.

Für die Übertragung der amplitudenmodulierten Signale im Burstbetrieb von einer Vielzahl von Teilnehmern T1 ... T8 zu einer Zentrale in Form einer Kopfstation KS dient der Rückkanal RKL, der im Frequenzbereich zwischen 702 und 862 MHz angesiedelt ist und - wie die Pegelwerte bis zum Koaxialkabelsystem nach der Figur 1 beweisen, auch in diesen Frequenzbereich mit erträglicher Dämpfung übertragen werden kann. Die Trägerfrequenz wurde bei einer Bruttobitrate von 156 Mbit/s zu 862 MHz gewählt. Da das untere Seitenband des amplitudenmodulierten Signals übertragen wird, ergibt sich dann das Frequenzband von 702 bis 862 MHz und damit eine Bandbreiteneffizienz von ca. 1 Bit/s/Hz. Damit ist nachgewiesen, daß durch das erfindungsgemäße Verfahren die bandbreiteneffiziente Übertragung digitaler Signale von Teilnehmern zu einer Zentrale auch in dem bereits stark dämpfenden Frequenzbereich um 800 MHz bei den Kabelfernsehsysteme verwendeten Koaxialkabeln möglich ist.

Bei einer Variante der Erfindung werden anstelle von Koaxialkabeln zumindest für einen Teil der Übertragungsstrecke Funkstrecken verwendet. Es zeigt sich, daß auch in diesem Falle das erfindungsgemäße Verfahren zur trägerfrequenten Direktübertragung digitaler Signale im Burstbetrieb vorteilhaft einsetzbar ist.

## Patentansprüche

1. Verfahren zur trägerfrequenten Übertragung digitaler Signale im Burst-Betrieb,
**dadurch gekennzeichnet,**
daß die digitalen Signale vor der Aussendung einer Einseitenband-Amplitudenmodulation unterworfen werden.

2. Verfahren nach Anspruch 1,
**dadurch gekennzeichnet,**
daß bei der Einseitenband-Amplitudenmodulation die Signale mehr als zwei Amplitudenstufen annehmen können.

3. Verfahren nach Ansprüchen 1 oder 2,
**dadurch gekennzeichnet,**
daß die Übertragung der amplitudenmodulierten Signale über Koaxialkabel (K1...K8) erfolgt.

4. Verfahren nach Anspruch 3,
**dadurch gekennzeichnet,**
daß die Übertragung der amplitudenmodulierten Signale im Burst-Betrieb von einer Vielzahl von Teilnehmern (T1...T8)zu einer Zentrale (KS) erfolgt, während von der Zentrale zu den Teilnehmern im Dauerbetrieb Fernseh- und/oder Rundfunksignale wahlweise in analoger Technik und/oder kombiniert mit vielstufiger Quadratur-Amplitudenmodulation übertragen werden.

5. Verfahren nach Anspruch 4,
**dadurch gekennzeichnet,**
daß die Übertragung der amplitudenmodulierten Signale von den Teilnehmern (T1...T8) zur Zentrale in einem Frequenzband (RKL) erfolgt, das oberhalb des für die Übertragung von der Zentrale (KS) zu den Teilnehmern (T1...T8) verwendeten Frequenzbandes (CATV, ZK) liegt.

6. Verfahren nach Ansprüchen 1 oder 2,
**dadurch gekennzeichnet,**
daß die Übertragung mittels Funk erfolgt.
